# EUROPÄISCHE PATENTANMELDUNG

(11) **EP 0 527 297 A1**
(43) Veröffentlichungstag der Anmeldung: **17.02.1993**
(21) Anmeldenummer: 92107988.5
(22) Anmeldetag: 12.05.1992
(51) Int. Cl.: D06F 39/08, A47L 15/42, F16L 11/11

(54) **Wasserführendes Haushaltgerät**

(30) Priorität: 13.08.1991 DE 4126771
(71) Anmelder: Bosch-Siemens Hausgeräte GmbH, D-81669 München (DE)
(72) Erfinder: Fedke, Rainer, W-1000 Berlin 22 (DE)

(57) **Zusammenfassung**

Zur Vereinheitlichung von Wasserleitungs-Bauteilen für die interne und externe Wasserführung insb. bei Wasch- oder Geschirrspülmaschinen wird vorgeschlagen, die oder einen Teil der Wasserleitungs-Bauteile aus Wellrohr-Knickschläuchen darzustellen, deren Ringwellen gerade, im ungleichen Winkel α,β in bezug auf die Längsachse 18 des Schlauches paarweise einander zugeneigte Flanken 14, 15 haben.

Derartige Wellrohr-Knickschläuche sind längenanpaßbar und an ihrer Knickstelle formstabil.

## Beschreibung

Die Erfindung geht aus von einem wasserführenden Haushaltgerät mit Wasserleitungs-Bauteilen für die interne und externe Wasserführung, insb. Wasch- oder Geschirrspülmaschine.

Gebräuchliche Haushaltgeräte der genannten Art sind mit knickelastischen Wasserleitungs-Bauteilen ausgestattet. Beispielsweise werden interne Wasserleitungs-Bauteile regelmäßig als Gummischläuche (Meterware) oder als vorkonfektionierte Gummischlauch-Formteile ausgeführt. Im Falle von Meterware müssen verschieden lange Stücke für unterschiedliche Anwendungsfälle innerhalb eines Gerätes geschnitten werden. Die Lagerung aufgerollter Meterware ist noch verhältnismäßig raumaufwendig. Im Falle von Formteilen müssen Wasserleitungs-Bauteile in besonderen Gußformen für den bestimmten Anwendungsfall konstruiert, hergestellt und gelagert werden. Häufig werden solche Formteile bereits bei geringfügigen Änderungen an ihren Anwendungsorten unbrauchbar und müssen ebenfalls wieder geändert werden. Die Herstellung und die Lagerung dieser Formteile ist teuer und raumaufwendig.

Der Erfindung liegt die Aufgabe zugrunde, Wasserleitungs-Bauteile für die genannten Anwendungen zu finden, die frei von den geschilderten Nachteilen sind.

Erfindungsgemäß wird diese Aufgabe dadurch gelöst, daß die oder ein Teil der Wasserleitungs-Bauteile aus Weilrohr-Knickschläuchen bestehen, deren Ringwellen gerade, im ungleichen Winkel in bezug auf die Längsachse des Schlauches paarweise einander zugeneigte Flanken haben.

Die erfindungsgemäße Anwendung von Wellrohr-Knickschläuchen hat eine Reihe von gravierenden Vorteilen gegenüber den beim Stand der Technik verwendeten Meterware- oder Formteil-Wasserleitungen. Da sich jeder Wellrohr-Knickschlauch der genannten Art auf einen Bruchteil der ausgezogenen Länge zusammenschieben läßt (z.B. L/3), kann in einem Längenbereich von 3:1 jede gewünschte Länge mit einem standardisierten Abschnitt eines Wellrohr-Knickschlauches überbrückt werden. Bei einer erforderlichen Länge für ein derartiges Wasserleitungs-Bauteil in einem Haushaltgerät von beispielsweise maximal 30 cm, können alle zwischen 10 und 30 cm liegenden Längen durch einen Wellrohr-Knickschlauch einheitlicher Auszugs-Länge überbrückt werden. Bei Längen unter 30 cm klappen je nach Längenverkürzung mehrere oder wenigere derjenigen Flanken in Richtung auf die andere Flanke eines Paares um, die einen steileren Neigungswinkel (in bezug auf die Längsachse des Schlauches) haben. Diese gestauchte Lage der Flanken bleibt stabil, weil der Außendurchmesser in dieser Lage kleiner ist als bei kurzzeitig eingestelltem Neigungswinkel zwischen 90° und, z.B., 75°.

Diese Längenvarianz führt außerdem zu einem kleineren Transport- und Lagerungsvolumen bei zusammengeschobenen Wellrohr-Knickschläuchen.

Als weiterer Vorteil ist zu vermerken, daß die Flanken derartiger Wellrohr-Knickschläuche auch einseitig in bezug auf die Längsachse stabil eingeklappt werden können, womit sich praktisch jeder gewünschte Bogen an jeder beliebigen Stelle eines Wellrohr-Knickschlauches stabil einstellen läßt.

Bei Verwendung als Ablaufschlauch für Waschmaschinen, der am ablaufseitigen Ende häufig einen stabilen Bogen zum Einhängen in ein Waschbecken oder eine Badewanne braucht, kann der bei bogenflexiblen Wellrohr-Schläuchen bisher verwendete Bogenhalter eingespart werden, wenn die Klapplage der Flanken durch geeignete Bemessung der Neigungswinkel, Wanddicken und Flankentiefen ausreichend stabil gehalten werden kann.

Wenn gemäß einer vorteilhaften Weiterbildung der Erfindung bei ausgezogenem Wellrohr-Knickschlauch alle einem Schlauchende zugekehrten Flanken einen Neigungswinkel zur Längsachse im Bereich von 69° bis 81° und alle dem anderen Schlauchende zugekehrten Flanken einen Neigungswinkel zur Längsachse im Bereich von 54° bis 66° haben, dann läßt sich ein ausreichend großer Längenbereich erfassen und eine stabile Klapplage für die Flanken erzielen. Damit sind dann Formstücke stabil nachbildbar. Als besonders vorteilhaft haben sich dabei Neigungswinkel von jeweils 60° und 75° herausgestellt.

Bei einer Fertigung der Wellrohr-Knickschläuche aus einem hartelastischen Kunststoff sind stabile Längen und Bögen besonders gut erzielbar.

Anhand des in der Zeichnung dargestellten Ausführungsbeispiels ist die Erfindung nachstehend erläutert. Es zeigen
- Fig. 1: eine perspektivische Innenansicht einer Waschmaschine mit teilweise sichtbaren Wasserleitungs-Bauteilen und
- Fig. 2: einen geschnitten dargestellten Abschnitt eines erfindungsgemäßen Wellrohr-Knickschlauches.

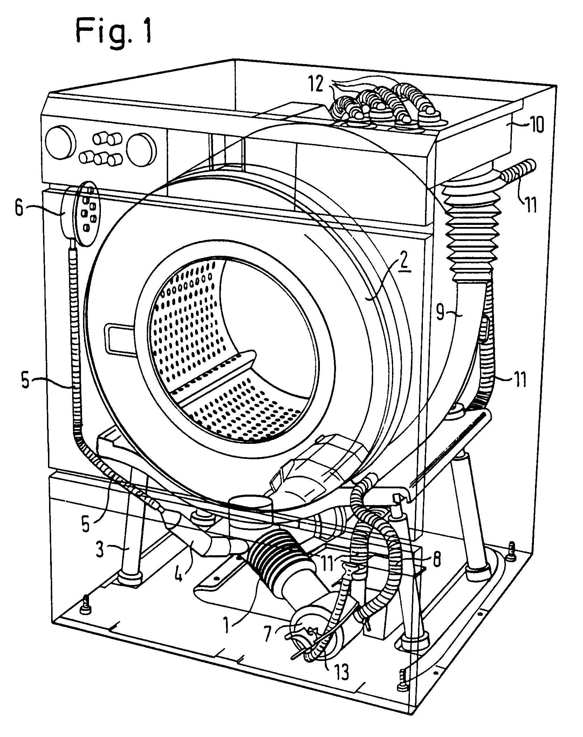

Am Abflußschlauch 1 aus dem über Federbeine 3 schwingbeweglich gelagerten Laugenbehälter 2 der in Fig. 1 dargestellten Waschmaschine ist ein Druckgebergehäuse 4 angeschlossen, das über eine Schlauchleitung 5 mit einem oben in der Waschmaschine ortsfest angeordneten Membranschalter 6 verbunden ist. Am abflußseitigen Ende des Abflußschlauches 1 ist eine Pumpe 7 mit vorgeschalteter Filterkammer angeschlossen, die außerdem über eine Umlaufleitung 8 mit dem Mündungsbereich einer Waschmittel-Zufuhrleitung 9 verbunden ist, die ihrerseits am Ausgang einer Waschmittel-Einspülschale 10 angeschlossen ist. Die Druckleitung 11 der Laugenpumpe 7 führt im unteren Bereich von der Laugenpumpe quer durchs Gehäuse nach hinten, an der Rückwand der Waschmaschine nach oben und dort durch die Rückwand hindurch nach außen. An Zuflußstutzen einer Waschmittel-Einspülschale 10 sind Wasserleitungs-Bauteile 12 angeschlossen, die mit nicht dargestellten Magnetventilen verbunden sind. An der Vorderwand der Filterkammer der Laugenpumpe 7 ist ferner ein Entleerungsschlauch 13 angeordnet, mit Hilfe dessen die Filtervorkammer und der Ablaufschlauch 1 entleert werden kann, bevor der Deckel der Filtervorkammer geöffnet wird.

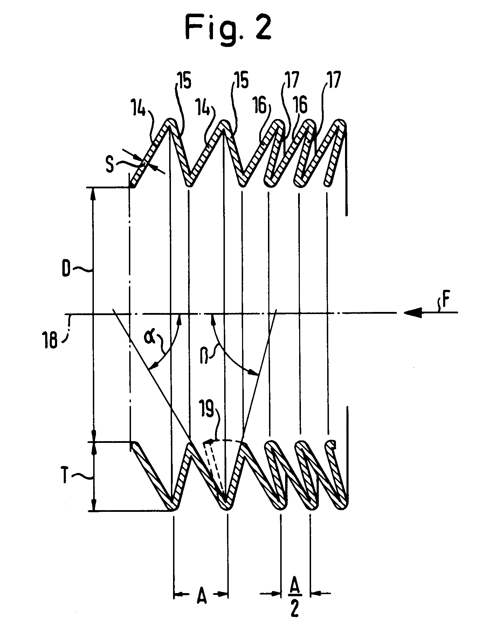

Alle dargestellten Wasserleitungs-Bauteile 1, 5, 8, 9, 11, 12 und 13 können gemäß der Erfindung aus Wellrohr-Knickschläuchen bestehen, deren Ringwellen gerade, im ungleichen Winkel in bezug auf die Längsachse 18 des Schlauches paarweise einander zugeneigte Flanken haben. Ein Beispiel für die Ausbildung eines solchen Wellrohr-Knickschlauches ist anhand des in Fig. 2 geschnitten dargestellten Abschnitts eines solchen Schlauches erläutert. Im ausgezogenen Zustand des Wellrohr-Knickschlauches stehen die Flanken 14 und 15 gemäß der zwei links dargestellten Wellen einander zugeneigt. Die an sich mit den Flanken 14 und 15 übereinstimmenden Flanken 16 und 17 des rechten Teils des dargestellten Wellrohr-Knickschlauch-Abschnitts sind alle in derselben Richtung auf die Längsachse 18 des Schlauches geneigt. Dabei sind die Flanken 17 aus ihrer ursprünglichen Stellung gemäß der dargestellten Flanken 15 durch Krafteinwirkung F in Richtung der Längsachse 18 in die rechts dargestellte Klappstellung überführt worden.

In der ausgezogenen Stellung haben die Flanken 14 einen Neigungswinkel α von ungefähr 60° gegen die Längsachse 18. Die Flanken 15 haben dabei einen Neigungswinkel β von ungefähr 75° gegen die Längsachse 18 und sind dabei der dem Paar zugehörigen Flanke 14 zugeneigt. Durch Einleitung einer bestimmten Kraft F können die Flanken 15 gemäß gestrichelt dargestelltem Pfeil 19 in die gemäß Flanken 17 gezeigte Position umklappen und nehmen dann einen etwa gleich großen Neigungswinkel wie den Neigungswinkel β ein, sind aber der ihrem Paar zugehörigen Flanke 14 nicht mehr zugeneigt. Die Größe der Kraft F, die zum Einklappen und auch zum Ausklappen der Flanken 15 zur Stellung der Flanken 17 erforderlich ist, bestimmt sich aus dem Neigungswinkel β, der Wandungsdicke S des Knickschlauches, des Innendurchmessers D des Knickschlauches sowie der Tiefe T der Ringwellen. Daß bei Einleitung der Kraft F nur die Flanken 15, nicht aber die Flanken 14 einklappen, liegt daran, daß die Flanken 15 auf ihrem Klappweg gemäß Pfeil 19 eine kleinere Durchmesserveränderung der Ringwellen überwinden müssen als dies beim Einklappen der Flanken 14 erforderlich wäre. Das heißt, daß die Flanken 14 zur Veränderung ihres Neigungswinkels α eine größere Materialspannung überwinden müßten als die Flanken 15 beim Ändern des Neigungswinkels β.

Bei den dargestellten Abmessungen haben die Ringwellen im ausgezogenen Zustand des Knickschlauches einen Abstand A. Bei eingeklappten Flanken 17 beträgt der Abstand der Ringwellen nur noch A/2. In gewissen Grenzen können die Abmessungen so verändert werden, daß das Abstandsverhältnis andere Proportionen einnehmen kann. Beispielsweise ist ein Abstandsverhältnis von 3:1 ebenfalls möglich, wenn die Neigungswinkel flacher gestellt sind. Damit dann die Kraft F zur Verkürzung des Wellrohr-Knickschlauches bzw. zur Verlängerung des verkürzten Schlauches nicht zu groß wird, muß einerseits die Materialdicke S und/oder die Tiefe T der Ringwellen kleiner sein.

An Wellrohr-Knickschläuchen können nicht nur Längenveränderungen vorgenommen werden, indem einzelne oder eine ganze Gruppe von Ringwellen auf engeren Abstand gestellt werden. Es ist auch möglich, Ringwellen nur einseitig auf engeren Abstand zu stellen. Dadurch erfährt die Längsachse 18 des Wellrohr-Knickschlauches eine gewisse Abknickung. Werden mehrere Ringwellen hintereinander an derselben Seite eng gestellt, so läßt sich damit ein Bogen für die Längsachse 18 einstellen. Hierdurch ist eine beliebige Abwinkelung des Wellrohr-Knickschlauches einstellbar.

Bei dem in Figur 2 dargestellten Beispiel sind die Neigungswinkel und auf 60° und 75° eingestellt. Als am geeignetsten für die Einstellung und Variation der Neigungswinkel haben sich für den Winkel α ein Bereich von 54° bis 66° und für den Winkel β ein Bereich von 69° bis 81° erwiesen. Bei der Wahl der Winkelpaarung ist jedoch darauf zu achten, daß die Winkelwerte einen Abstand von mindestens 10° zueinander haben, damit eindeutigerweise immer nur die Flanken 15 bzw. 17 in die bzw. aus der Verkürzungsstellung klappen können und nicht etwa die Flanken 14 bzw. 16.

## Patentansprüche

1. Wasserführendes Haushaltgerät mit Wasserleitungs-Bauteilen für die interne und externe Wasserführung, insb. Wasch- oder Geschirrspülmaschine, **dadurch gekennzeichnet,** daß die oder ein Teil der Wasserleitungs-Bauteile (1, 5, 8, 9, 11, 12, 13) aus Wellrohr-Knickschläuchen bestehen, deren Ringwellen gerade, im ungleichen Winkel (α,β) in bezug auf die Längsachse (18) des Schlauches paarweise einander zugeneigte Flanken (14, 15) haben.

2. Haushaltgerät nach Anspruch 1, dadurch gekennzeichnet, daß bei ausgezogenem Wellrohr-Knickschlauch alle einem Schlauchende zugekehrten Flanken (15) einen Neigungswinkel (β) zur Längsachse (18) im Bereich von 69° bis 81° und alle dem anderen Schlauchende zugekehrten Flanken (14) einen Neigungswinkel (α) zur Längsachse (18) im Bereich von 54° bis 66° haben.

3. Haushaltgerät nach Anspruch 2, dadurch gekennzeichnet, daß die beiden Neigungswinkel (α und β) 60° und 75° betragen.

4. Haushaltgerät nach einem der vorstehenden Ansprüche, dadurch gekennzeichnet, daß der Wellrohr-Knickschlauch aus einem hartelastischen Kunststoff gefertigt ist.
